# DEMANDE DE BREVET EUROPEEN

(11) **EP 1 043 203 A1**
(43) Date de publication de la demande: **11.10.2000**
(21) Numéro de dépôt: 00400974.2
(22) Date de dépôt: 07.04.2000
(51) Int. Cl.: B60R 25/02

(54) **Antivol de véhicule automobile**

(30) Priorité: 09.04.1999 FR 9904437
(71) Demandeur: VALEO SECURITE HABITACLE, 94000 Créteil (FR)
(72) Inventeur: Garnault, Joel, 95110 Sannois (FR)
(74) Mandataire: Lenne, Laurence

(57) **Abrégé**

L'invention propose un antivol de véhicule automobile du type comportant un organe (32) de commande manuelle du démarrage du moteur du véhicule et du verrouillage de la colonne de direction (12, A1) du véhicule comportant un axe de commande (30) qui est monté à rotation entre au moins une position angulaire de repos et une position angulaire de démarrage du moteur et qui est monté mobile axialement entre une position arrière tirée de verrouillage de la colonne de direction et une position avant poussée de déverrouillage de la colonne de direction, et du type comportant un dispositif d'identification dans lequel une clef (20) est introduite longitudinalement (D) pour occuper une position enfoncée qui autorise la rotation de l'axe de commande (30) si la clef est une clef conforme, caractérisé en ce qu'il comporte des moyens mécaniques (34, 36, 38, 44) qui provoquent automatiquement un déplacement axial de l'axe de commande vers sa position avant ou vers sa position arrière lorsque la clef (20) est introduite ou retirée du lecteur, respectivement.

## Description

La présente invention concerne un antivol pour véhicule automobile.

On connaît un antivol de véhicule automobile du type comportant un mécanisme de serrure qui est condamnée par un verrou dont le déverrouillage est obtenu en introduisant axialement la tige d'une clef conforme dans un rotor du verrou.

De tels types d'antivols sont généralement prévus pour commander le blocage de la colonne de direction du véhicule ainsi que pour commander l'alimentation électrique de divers organes du moteur.

Dans un tel agencement, le conducteur, après avoir introduit une clef conforme dans un barillet du verrou, peut tout d'abord inhiber le mécanisme de serrure qui bloque la rotation de l'arbre de la colonne de direction, puis en tournant la clef vers différentes positions angulaires successives, provoquer l'alimentation électrique de différents organes du véhicule, notamment du démarreur, et provoquer ainsi le démarrage du moteur.

L'inconvénient majeur de ces dispositifs d'antivol est qu'ils utilisent des verrous rotatifs aisément crochetables. En effet, si le verrou est un verrou à paillettes mobiles, il est possible de déplacer les paillettes une à une jusqu'à les amener dans une position dans laquelle le verrou est déverrouillé.

Pour lutter contre cette possibilité de crochetage, il a été proposé des antivols dits électroniques dans lesquels les dispositifs d'actionnement du mécanisme de serrure de commande de l'alimentation électrique des organes du véhicule sont assurés par une unité centrale électronique, elle-même déclenchée par des dispositifs d'identification tels que des badges radiofréquence ou des dispositifs de télécommande.

Par ailleurs, d'une manière générale, on a développé des solutions d'accès à l'intérieur du véhicule dites "mains libres" faisant appel à un moyen d'identification électronique permettant de remplacer la clef mécanique ou le dispositif de télécommande.

L'autorisation du démarrage du moteur peut alors être réalisée de deux manières.

Dans un premier cas dit "mains libres complet", le démarrage est autorisé par la seule présence dans l'habitacle de l'identifiant électronique qui est par exemple un badge porté par le conducteur du véhicule.

Dans les autres cas, l'autorisation de démarrage nécessite l'insertion d'une clef "électronique" dans un dispositif d'identification embarqué à bord du véhicule qui se présente généralement sous la forme d'un lecteur agencé sur la planche de bord du véhicule.

Comme l'illustre par exemple le document WO-A-96/16.844, l'ensemble des solutions connues fait appel à l'agencement d'un lecteur sur la planche de bord du véhicule, dans le boîtier entourant la colonne de direction ou dans l'accoudoir du véhicule ou un élément voisin tel que la console centrale.

Le badge formant clef "électronique" se présente notamment sous la forme d'un support de données ayant des dimensions proches et homologues de celles d'une carte de crédit à puce.

Il est aussi possible d'introduire indirectement le badge dans un tiroir spécifique que l'on referme ensuite et qui assure le mouvement d'introduction et de mise en place du badge dans un logement du lecteur.

Une fois l'identification "électronique" réalisée, le démarrage s'effectue par action, impulsionnelle ou maintenue, sur un organe de commande tel que par exemple un poussoir et/ou un commutateur rotatif.

La réglementation impose le déblocage du mécanisme d'antivol, c'est-à-dire des moyens d'immobilisation qui coopèrent avec l'arbre de la colonne de direction en vue de bloquer ce dernier en rotation, et ce déblocage doit dans tous les cas prendre en compte un signal électronique d'autorisation émis par l'unité qui a validé le code reçu du lecteur de clef.

Le déblocage du mécanisme d'antivol peut être assuré par des moyens comportant un actionneur.

Lorsque le véhicule est équipé d'une boîte de vitesses automatique, le déblocage mécanique de la fonction antivol peut être assuré par le calculateur de gestion de la boîte de vitesses automatique qui autorise alors le fonctionnement de la boîte.

Dans tous les cas, il est nécessaire de pouvoir répondre à la contrainte réglementaire selon laquelle le blocage mécanique à nouveau de l'antivol, c'est-à-dire la réactivation des moyens d'immobilisation de la colonne de direction, ne doit avoir lieu que lorsque la clef, sous forme de badge, est sortie ou extraite d'une longueur minimum hors du lecteur de badge.

Par ailleurs, il est nécessaire de maintenir la clef sous forme de badge verrouillée dans le dispositif de lecture durant tout le roulage du véhicule.

La commande des différentes phases d'alimentation électrique des équipements du véhicule et du circuit d'allumage du moteur doit par ailleurs être assurée, d'une manière connue, par exemple au moyen d'un commutateur rotatif qui est traditionnellement entraîné en rotation par le rotor lié au verrou à barillet.

Afin de réduire les coûts des mécanismes d'antivol, une solution a déjà été proposée qui consiste à remplacer le verrou par un dispositif permettant de bloquer le départ en rotation à partir de la position verrouillée tant qu'un code d'identification convenable n'a pas été reçu. Cette solution est dite "mécaniquement compatible" car ces composants mécaniques, électriques et électroniques peuvent être agencés en lieu et place des composants mécaniques d'un antivol classique sans avoir à modifier les boîtiers et tubes correspondants.

La clef mécanique insérée est alors remplacée par un bouton rotatif permanent. Afin de respecter les dispositions réglementaires, le lâcher du pêne pour verrouiller l'arbre de la colonne de direction n'est effectué que lorsque le bouton rotatif de commande a été ramené angulairement dans une position de blocage et que ce bouton a été tiré axialement d'une distance minimale.

Cette solution permet de réduire les coûts liés à la conception de l'antivol de direction, mais il demeure des problèmes de compatibilité et de surcoût dans la conception et la réalisation des véhicules qui sont liés à la présence optionnelle ou non du lecteur du badge d'identification prévu notamment sur le tableau de bord.

L'invention a pour objet de résoudre ces problèmes de surcoût liés à la présence optionnelle du lecteur de badge et d'assurer de façon automatique le "tiré" du bouton pour verrouiller l'arbre de colonne de direction car ce mouvement de traction à assurer par le conducteur sur le bouton de commande est une contrainte pour celui-ci et il existe un risque de vol facilité du véhicule en cas d'oubli de la part du conducteur.

Dans ce but, l'invention propose un antivol de véhicule automobile du type comportant un organe de commande manuelle du démarrage du moteur du véhicule et du verrouillage de la colonne de direction du véhicule comportant un axe de commande qui est monté à rotation entre au moins une position angulaire de repos et une position angulaire de démarrage du moteur et qui est monté mobile axialement entre une position arrière tirée de verrouillage de la colonne de direction et une position avant poussée de déverrouillage de la colonne de direction, et du type comportant un dispositif d'identification dans lequel une clef est introduite longitudinalement pour occuper une position enfoncée qui autorise la rotation de l'axe de commande si la clef est une clef conforme, caractérisé en ce qu'il comporte des moyens mécaniques qui provoquent automatiquement un déplacement axial de l'axe de commande vers sa position avant ou vers sa position arrière lorsque la clef est introduite ou retirée du lecteur, respectivement.

Selon d'autres caractéristiques de l'invention :
- les moyens de conversion comportent un mécanisme de conversion des déplacements longitudinaux de la clef en des déplacements axiaux de l'axe de commande ;
- le mécanisme de conversion comporte une came qui est liée en translation axiale à l'axe de commande et avec laquelle coopère la clef pour pousser ou tirer automatiquement l'axe de commande lorsqu'elle est introduite ou extraite dans le dispositif d'identification ;
- la came comporte deux surfaces de came tronconiques convexes opposées, avant et arrière, avec chacune desquelles coopère un doigt d'actionnement, respectivement avant et arrière, qui sont agencés en V et dont chacun est porté par l'axe de pivotement, parallèle à l'axe de commande, d'un levier d'actionnement sur lequel agit la clef pour transformer les déplacements longitudinaux de la clef dans les deux sens en une rotation dans les deux sens du levier d'actionnement ;
- l'extrémité libre du levier d'actionnement comporte au moins une rampe sur laquelle agit un bord de la clef pour provoquer le pivotement du levier d'actionnement dans au moins un sens ;
- le levier d'actionnement est rappelé élastiquement vers une position angulaire dans laquelle l'axe de commande est tiré vers sa position arrière de verrouillage ;
- l'extrémité libre du levier d'actionnement comporte une rampe supérieure d'actionnement avec laquelle coopère ledit bord de la clef, lors de l'introduction de cette dernière dans le dispositif d'identification, pour provoquer le pivotement du levier d'actionnement à l'encontre de l'effort de rappel qui lui est appliqué et pousser l'axe de commande vers sa position avant de déverrouillage ;
- la clef comporte un cran de retenue, et le l'extrémité libre du levier d'actionnement est conformée en bec pour être reçue dans ledit cran en vue de retenir la clef en position enfoncée ;
- le cran est formé à proximité dudit bord de la clef, et le bec de retenue est délimité par ladite rampe supérieure et par une rampe inférieure provoquant l'échappement du bec de retenue hors du cran lors de l'extraction de la clef hors du dispositif d'identification ;
- la direction d'introduction longitudinale de la clef est sensiblement perpendiculaire à l'axe de pivotement du levier d'actionnement ;
- l'antivol comporte des moyens de blocage en rotation de l'axe de pivotement du levier d'actionnement dans sa position angulaire de retenue de la clef pour empêcher l'extraction de cette dernière lorsque l'axe de commande n'est pas dans sa position angulaire de repos ;
- les moyens de blocage comportent deux butées complémentaires liées respectivement en rotation à l'axe de commande et à l'axe de pivotement du levier d'actionnement ;
- l'antivol comporte un boîtier comportant une ouverture pour l'introduction de la clef dans le dispositif d'identification et qui est équipé d'un bouton de manoeuvre de l'axe de commande pour l'actionnement en rotation de ce dernier entre ses différentes positions angulaires ;
- le dispositif d'identification est un dispositif de lecture de données contenues dans une clef réalisée sous la forme d'un support de données, notamment en forme de badge.

D'autres caractéristiques et avantages de la présente invention apparaîtront mieux à la lecture de la description qui suit faite en référence aux dessins annexés dans lesquels :
- la figure 1 est une vue schématique en perspective qui illustre certains composants d'un boîtier de colonne de direction d'un véhicule automobile équipé d'un antivol conforme aux enseignements de l'invention ;
- la figure 2 est une vue schématique à plus grande échelle des principaux composants de l'antivol illustré à la figure 1 ;
- la figure 3 est une vue schématique selon la flèche F3 de la figure 2 qui illustre les positions occupées par les principaux composants de l'antivol en position extraite du badge ;
- la figure 4 est une vue schématique selon la flèche F4 de la figure 3 ; et
- les figures 5 et 6 sont des vues similaires à celles des figures 3 et 4 en position introduite du badge d'identification.

Dans la description qui va suivre, des composants identiques, similaires ou analogues seront désignés par les mêmes chiffres de référence.

On utilisera, à titre non limitatif, les termes "vertical", "horizontal", "supérieur", "inférieur", etc. pour faciliter la description et la rédaction des revendications.

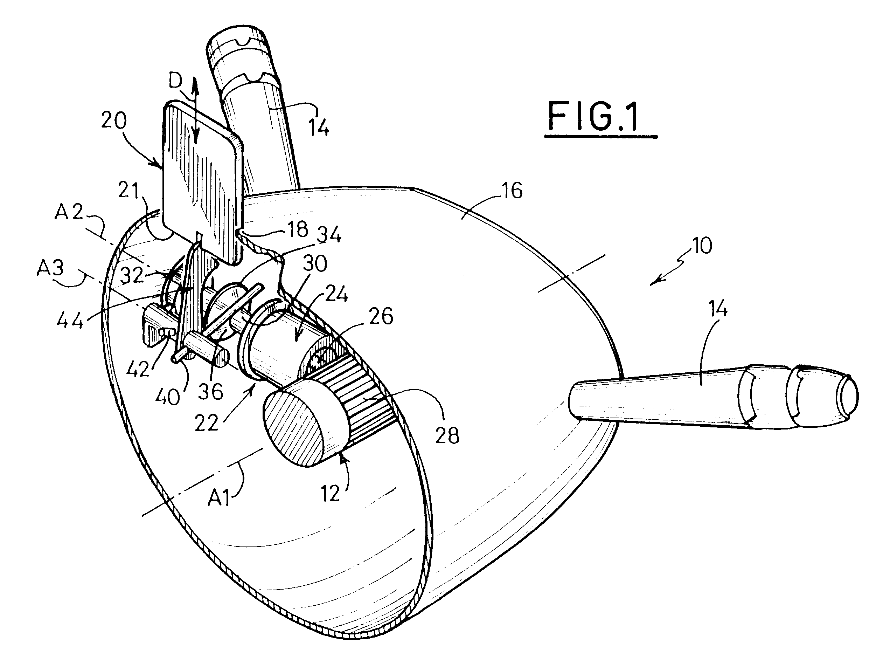

On reconnaît sur la figure 1 un boîtier 10 de colonne de direction de forme générale connue qui est agencé dans l'habitacle du véhicule et qui est notamment traversé axialement, selon un axe A1, par un arbre de colonne de direction 12 sur lequel le conducteur agit au moyen du volant (non représenté).

Le boîtier 10 peut aussi comporter deux leviers ou manettes 14 pour la commande de différents équipements du véhicule.

Le boîtier 10 est un boîtier creux dont la paroi 16 comporte une fente 18 permettant, conformément aux enseignements de l'invention, l'introduction ou l'extraction longitudinale d'un badge 20 formant clef électronique dans un dispositif de lecture (non représenté) intégré dans le boîtier 10.

Dans l'exemple de réalisation illustré sur les figures, la direction D est verticale et orthogonale à l'axe A1 et la conformation de la fente 18 et du badge 20 en forme générale de carte sont telles que le badge 20 s'étend globalement dans un plan vertical perpendiculaire à l'axe A1.

Selon une conception générale connue, qui ne sera pas décrite en détail, l'ensemble du dispositif d'antivol 22 agencé à l'intérieur du boîtier 10 comporte un mécanisme 24 d'immobilisation en rotation de l'arbre de colonne de direction 12 autour de son axe A1 qui est agencé de manière fixe dans le boîtier 10 et qui comporte notamment un pêne de verrouillage 26 qui est monté mobile axialement dans le boîtier 24 selon un axe A2 perpendiculaire à l'axe A1.

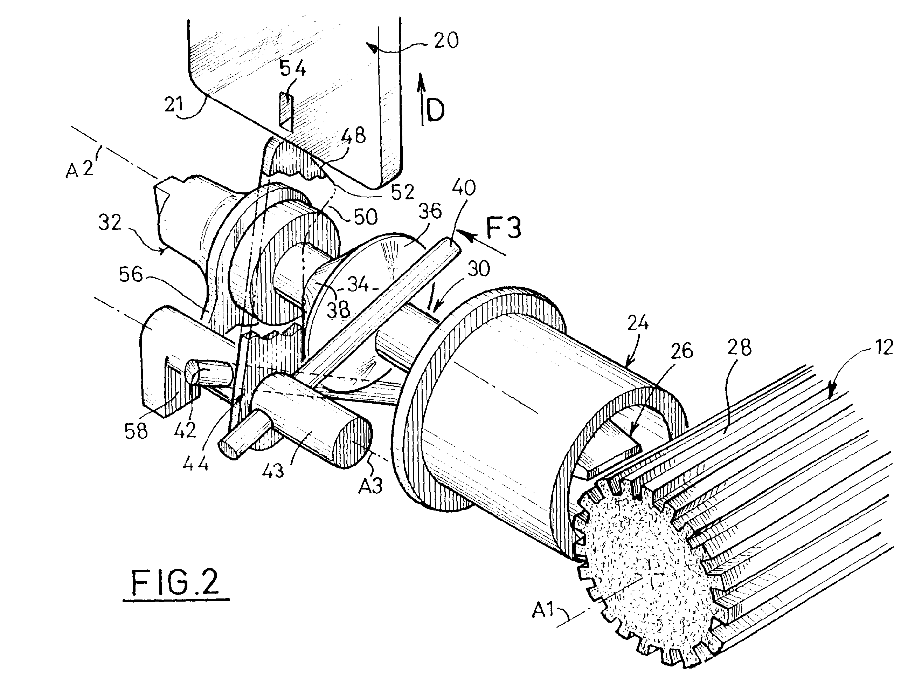

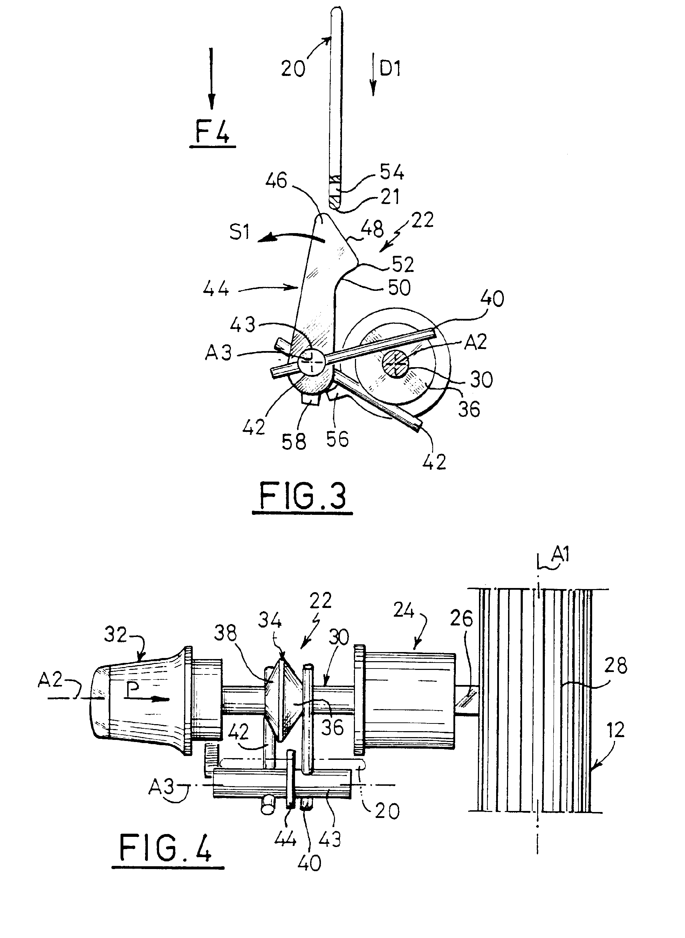

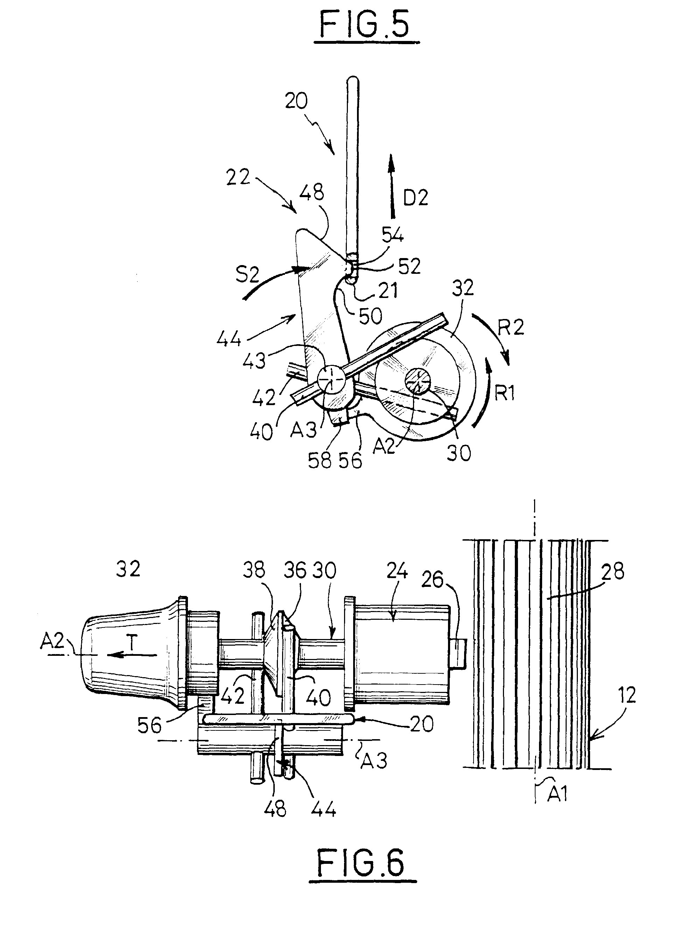

Le pêne 26 est monté mobile en coulissement entre une position arrière escamotée, représentée notamment aux figures 2 et 6, et une position avant, représentée à la figure 4, dans laquelle le pêne 26 est reçu dans une cannelure complémentaire 28 de l'arbre 12 de la colonne de direction pour immobiliser ce dernier en rotation autour de son axe A1.

Le dispositif d'antivol 22 comporte aussi un organe de commande qui comporte un axe ou tige de commande 30 monté à rotation et mobile axialement selon son axe géométrique A2 qui correspond ici à l'axe de déplacement du pêne 26.

L'axe de commande 30 a pour première fonction d'agir sur le mécanisme d'antivol 24 pour provoquer le blocage ou verrouillage de l'arbre 12 lorsqu'il est dans sa position axiale arrière tirée illustrée à la figure 4, ou le déblocage ou déverrouillage de l'arbre 12 lorsqu'il est dans sa position axiale poussée illustrée à la figure 6.

L'axe ou tige de commande 30 est lié en rotation et en translation à un bouton de commande 32 qui fait saillie hors du boîtier 10 à travers la paroi 16 pour constituer un organe de préhension manuelle permettant, dans l'exemple illustré sur les figures, à l'utilisateur d'entraîner la tige de commande 30 en rotation dans les deux sens.

Outre son action sur le mécanisme d'antivol 24 lorsqu'il est déplacé axialement, l'axe de commande 30 permet, lorsqu'il est entraîné en rotation dans l'un ou l'autre sens, et selon un agencement connu, d'agir sur un commutateur électrique rotatif (non représenté) qui est par exemple intégré au mécanisme 24 et qui commande différents circuits électriques d'alimentation du moteur du véhicule et du démarreur en vue de permettre le démarrage du moteur et l'alimentation en énergie électrique d'accessoires du véhicule.

La tige de commande 30 comporte, dans son tronçon central intermédiaire entre le bouton 32 et le mécanisme d'antivol 24, une came double biconique 34.

Ainsi, la came 34 comporte un tronc de cône avant 36 convexe et un tronc de cône arrière convexe 38 qui sont reliés entre eux par leur plus grand diamètre et qui vont en s'amincissant axialement respectivement vers l'avant et vers l'arrière de l'axe de commande 30.

La came double 34 est liée en translation à la tige de commande 30.

Pour coopérer avec la came double 34 afin de provoquer les déplacements axiaux dans l'un ou l'autre sens de l'axe de commande 30, l'agencement selon l'invention comporte deux doigts d'actionnement avant 40 et arrière 42.

Chaque doigt d'actionnement 40 est une tige cylindrique qui est liée en rotation à un axe d'entraînement ou d'actionnement 43, d'axe géométrique A3, qui est parallèle à l'axe de commande 30.

La tige 43 est montée pivotante dans les deux sens autour de son axe A3 et elle entraîne simultanément en rotation les deux doigts d'actionnement avant 40 et arrière 42 qui sont espacés axialement l'un de l'autre de manière à s'étendre de part et d'autre du plan moyen de la came double 34.

Comme on peut le voir notamment aux figures 3 et 5, les deux doigts d'actionnement 40 et 42 sont agencés transversalement en V, c'est-à-dire que, en considérant les figures 3 et 5, le doigt d'actionnement avant 40 est un doigt supérieur situé au dessus de l'axe de commande 30 et qui est susceptible de coopérer avec la surface avant de came 36 tandis que le doigt d'actionnement arrière 42 est un doigt inférieur qui s'étend en dessous de l'axe de commande 30 et qui est susceptible de coopérer avec la surface arrière de came 38 tronconique.

La distance axiale, selon l'axe A3, séparant les doigts d'actionnement 40 et 42 est telle que le pivotement dans l'un ou l'autre sens de l'axe A3 provoque la coopération du doigt d'actionnement avant 40 avec la surface avant de came 36 pour provoquer le recul vers l'arrière de l'axe de commande 30 ou, de manière univoque, la coopération du doigt d'actionnement arrière 42 avec la surface arrière de came 38 pour provoquer le déplacement vers l'avant de l'axe de commande 30.

Pour entraîner en pivotement la tige 43, celle-ci est liée en rotation à un levier d'actionnement 44 qui s'étend globalement radialement vers l'extérieur, selon une direction ici verticale, et vers le haut de manière que le badge 20 puisse coopérer, par son bord transversal inférieur 21, avec l'extrémité libre supérieure 46 du levier d'actionnement 44.

Plus précisément, le levier 44 est réalisé sous la forme d'une plaque qui s'étend dans un plan perpendiculaire à l'axe A3 et ici perpendiculaire au plan du badge 20.

La partie d'extrémité supérieure libre 46 est délimitée par un premier bord incliné supérieur 48 formant rampe qui est susceptible de coopérer avec le bord transversal inférieur 21 du badge 20 pour provoquer un pivotement angulaire du levier d'actionnement 44 dans le sens anti-horaire, autour de l'axe A3, en considérant la figure 3.

La partie d'extrémité supérieure libre 46 est aussi délimitée par un autre bord formant rampe inférieure 50 qui est concourant avec le bord 48 qui délimite un bec 52 de retenue du badge et susceptible d'être reçu ou non dans un cran de retenue 54 qui est formé dans le badge 20 au voisinage de son bord transversal inférieur 21.

L'axe ou tige d'actionnement 43, avec le levier 44, est rappelé élastiquement en permanence en rotation dans le sens horaire en considérant la figure 3 par des moyens élastiques de rappel qui ne sont pas représentés sur les figures.

La clef en forme de badge 20 est prévue pour être reçue, lorsqu'elle est introduite dans la fente 18 du boîtier 10, dans un logement d'un dispositif de lecture qui n'est pas représenté sur les figures pour simplifier la représentation et permettre d'illustrer la coopération du badge 20 avec le dispositif d'antivol 22.

Conformément à une autre caractéristique de l'invention, il est prévu des moyens mécaniques de blocage en rotation de l'axe de pivotement 43 du levier d'actionnement 44 dans sa position angulaire de retenue du badge 20 illustrée aux figures 5 et 6 pour empêcher l'extraction de ce dernier lorsque l'axe de commande 30 n'est pas dans sa position angulaire de repos illustrée aux figures 3 et 4.

Les moyens de blocage comportent une première butée de blocage 56 qui appartient au bouton 32 et qui est donc liée en rotation à ce dernier ainsi qu'à l'axe de commande 30, et une butée de blocage complémentaire 58 formée sur l'axe ou tige 43 qui porte le levier d'actionnement 44.

Selon une caractéristique connue, l'antivol comporte aussi des moyens (non représentés) qui autorisent la rotation de l'axe de commande 30 autour de son axe A1 si la clef en forme de badge 20 introduite dans le dispositif d'identification d'une clef conforme et qui empêche sa rotation dans le cas contraire.

On décrira maintenant le fonctionnement de l'antivol selon l'invention en se référant notamment aux figures 3 à 6.

En partant de la position illustrée aux figures 3 à 4, on décrira maintenant la séquence de déverrouillage de la colonne de direction.

Après avoir pénétré dans l'habitacle du véhicule, cette opération faisant éventuellement appel au badge 20 pour l'identification de l'utilisateur, ce dernier introduit le badge 20, selon la direction D et de haut en bas selon le sens D1 indiqué à la figure 3, dans la fente 18.

Cette introduction correspond à l'introduction du badge 20 dans le dispositif de lecture.

Si la clef en forme de badge est conforme, un code est transmis à une unité de commande qui autorisera ultérieurement la rotation de l'axe de commande 30 qui est initialement bloqué en rotation par des moyens non représentés.

L'introduction selon le sens D1 du badge 20 provoque aussi simultanément la coopération de son bord transversal inférieur 21 avec la rampe supérieure 48 du levier d'actionnement 44.

Cette coopération va provoquer la rotation dans le sens anti-horaire S1 indiquée à la figure 3 du levier d'actionnement 44 à partir de sa position de repos vers laquelle il est rappelé élastiquement.

La rotation du levier 44 dans le sens S1 provoque la rotation dans le même sens et simultanée des deux doigts d'actionnement 40 et 42.

Au cours de cette rotation, le doigt inférieur arrière 42 va coopérer avec la surface arrière de came 38 pour provoquer un déplacement axial vers l'avant, c'est-à-dire de la gauche vers la droite en considérant la figure 4, de l'axe de commande 30, pour appliquer à l'axe de commande 30 et au bouton de commande 32 un déplacement axial de poussée P.

La fin du mouvement d'introduction dans le sens D1 du badge 20 correspond à la pénétration automatique du bec de retenue 52 dans le cran de retenue 54 du badge 20.

Après introduction complète du badge 20, les différents composants occupent leur position illustrée aux figures 5 et 6.

Dans cette position, il est possible à l'utilisateur d'entraîner en rotation l'axe de commande 30 autour de l'axe géométrique A2 dans les deux sens afin de provoquer le démarrage du véhicule.

En vue du démarrage, le bouton 32 et l'axe de commande 30 sont notamment entraînés en rotation à l'encontre de l'effort élastique de rappel dans le sens R1 indiqué à la figure 5.

L'arbre 12 de la colonne de direction est aussi libéré en rotation autour de son axe A1 du fait de l'action sur le mécanisme d'antivol 24 résultant du déplacement axial vers l'avant de l'axe de commande 30.

Grâce à l'agencement de la came double et du levier d'actionnement, on réalise ainsi un exemple de moyens mécaniques de conversion des déplacements longitudinaux de la clef en des déplacements axiaux de l'axe de commande vers sa position avant ou vers sa position arrière lorsque la clef est introduite ou retirée du lecteur.

Dans la position dans laquelle le moteur est en marche, c'est-à-dire que le bouton 32 n'est pas dans sa position de repos, la butée 56 de blocage s'étend en regard de la butée 58 du levier d'actionnement 44.

Il est donc impossible à l'utilisateur d'extraire inopinément le badge 20 car toute tentative d'extraction de ce dernier selon le sens D2 indiqué à la figure 5 tendrait, du fait de la coopération du cran 54 avec la rampe inférieure 50, à provoquer un basculement ou pivotement supplémentaire dans le sens S1 du levier 44 autour de l'axe A3, ce pivotement étant rendu impossible du fait de la coopération des butées 56 et 58.

Pour sortir du véhicule et pouvoir extraire le badge 20, il est donc nécessaire que l'utilisateur ramène le bouton 32 et l'axe de commande 30 dans leur position angulaire dans laquelle les butées 56 et 58 ne soient plus en regard l'une de l'autre.

Dans cette position, il peut donc extraire le badge 20 dans le sens D2, ce qui provoque, sous l'action du ressort de rappel (non représenté) du levier 44, le pivotement automatique de ce dernier dans le sens S2 pour occuper à nouveau sa position angulaire illustrée à la figure 3.

Lors de ce pivotement dans le sens S2, c'est le doigt supérieur avant 40 qui coopère avec la surface avant de came 36 pour provoquer un déplacement axial de l'axe de commande 30 de la droite vers la gauche, c'est-à-dire pour lui appliquer un mouvement de tirage T qui va provoquer à nouveau le verrouillage de l'arbre 12 de la colonne de direction et aboutir à nouveau à la position illustrée à la figure 4.

Le déplacement axial vers l'arrière de l'axe de commande 30 est détecté par des moyens non représentés et provoque à nouveau le blocage en rotation de l'axe de commande 30.

Grâce à l'agencement selon l'invention, les deux positions extrêmes axiales poussée et tirée de l'axe de commande 30 sont indexées mécaniquement.

Selon un agencement connu, la commande de l'électroaimant qui bloque en rotation l'axe de commande 30 est temporisé pour faire face au cas d'introduction du badge 30 sans commande en rotation du bouton 32 et de retour du bouton 32 en position zéro sans extraction du badge 20.

L'agencement selon l'invention est particulièrement avantageux en ce qu'il n'aboutit qu'à des modifications légères de l'agencement du boîtier de colonne de direction, celui-ci pouvant être de conformation classique lorsqu'il n'est pas fait appel à un badge d'identification 20 pour autoriser le démarrage.

En effet, dans ce dernier cas dit "mains libres complet", il n'y a tout simplement pas de fente 18 pour l'introduction du badge 20.

Lorsque le véhicule est un modèle dit de bas de gamme, il est aussi possible de ne pas faire appel à un badge 20 et d'utiliser un bouton de commande 32 qui sert à la fois pour entraîner l'axe de commande en rotation et pour le tirer ou le pousser manuellement selon un agencement connu.

Selon différentes variantes non représentées de l'invention, il est également possible de décaler transversalement la position de l'axe A2 de l'axe de commande 30 par rapport à l'axe de coulissement du pêne, par exemple en prévoyant un système de renvoi par engrenages.

Il est aussi possible de remplacer le bouton rotatif 32 par un levier ou une manette que l'on bascule dans un sens pour mettre le contact puis démarrer et dans l'autre sens pour couper le contact.

Il est aussi possible de prévoir un double levier, l'utilisateur agissant sur le premier levier pour mettre le contact puis démarrer et sur le second levier pour couper le contact.

La visualisation de l'état ou position angulaire de l'axe de commande 30 peut par exemple être obtenue par des couleurs et/ou formes différentes des deux leviers et/ou par des voyants de couleurs différentes.

Les leviers peuvent aussi être placés dans des positions faisant appel à des axes de rotation distincts de manière que les commandes d'établissement du contact et de coupure de celui-ci soient différentes et qu'un tel détrompage mécanique et électrique dans l'espace évite toute fausse manoeuvre de la part de l'utilisateur.

## Revendications

1. Antivol de véhicule automobile du type comportant un organe (32) de commande manuelle du démarrage du moteur du véhicule et du verrouillage de la colonne de direction (12, A1) du véhicule comportant un axe de commande (30) qui est monté à rotation entre au moins une position angulaire de repos et une position angulaire de démarrage du moteur et qui est monté mobile axialement entre une position arrière tirée de verrouillage de la colonne de direction et une position avant poussée de déverrouillage de la colonne de direction, et du type comportant un dispositif d'identification dans lequel une clef (20) est introduite longitudinalement (D) pour occuper une position enfoncée qui autorise la rotation de l'axe de commande (30) si la clef est une clef conforme,
caractérisé en ce qu'il comporte des moyens mécaniques (34, 36, 38, 44) qui provoquent automatiquement un déplacement axial de l'axe de commande vers sa position avant ou vers sa position arrière lorsque la clef (20) est introduite ou retirée du lecteur, respectivement.

2. Antivol selon la revendication 1, caractérisé en ce que lesdits moyens mécaniques comportent un mécanisme de conversion des déplacements (A1) longitudinaux (D) de la clef (20) en des déplacements axiaux de l'axe de commande (30).

3. Antivol selon la revendication 2, caractérisé en ce que le mécanisme de conversion comporte une came (34) qui est liée en translation axiale à l'axe de commande (30) et avec laquelle coopère la clef (20) pour pousser ou tirer automatiquement l'axe de commande (30) lorsqu'elle est introduite ou extraite dans le dispositif d'identification.

4. Antivol selon la revendication 3, caractérisé en ce que la came (34) comporte deux surfaces de came tronconiques convexes opposées (36, 38), avant (36) et arrière (38), avec chacune desquelles coopère un doigt d'actionnement (40, 42), respectivement avant (40) et arrière (42), qui sont agencés en V et dont chacun est porté par l'axe de pivotement (43), parallèle à l'axe de commande (30), d'un levier d'actionnement (44) sur lequel agit la clef (20) pour transformer les déplacements longitudinaux (D) de la clef dans les deux sens en une rotation dans les deux sens du levier d'actionnement (44).

5. Antivol selon la revendication 4, caractérisé en ce que l'extrémité libre (46) du levier d'actionnement (44) comporte au moins une rampe (48) sur laquelle agit un bord (21) de la clef (20) pour provoquer le pivotement du levier d'actionnement (44) dans au moins un sens.

6. Antivol selon l'une des revendications 4 ou 5, caractérisé en ce que le levier d'actionnement (44) est rappelé élastiquement vers une position angulaire dans laquelle l'axe de commande (30) est tiré vers sa position arrière de verrouillage

7. Antivol selon la revendication 6 prise en combinaison avec la revendication 5, caractérisé en ce que l'extrémité libre (46) du levier d'actionnement comporte une rampe supérieure d'actionnement (48) avec laquelle coopère ledit bord (21) de la clef (20), lors de l'introduction de cette dernière dans le dispositif d'identification, pour provoquer le pivotement du levier d'actionnement (44) à l'encontre de l'effort de rappel qui lui est appliqué et pousser l'axe de commande (30) vers sa position avant de déverrouillage.

8. Antivol selon l'une quelconque des revendications des revendications 4 à 7, caractérisé en ce que la clef (20) comporte un cran de retenue (54), et en ce que l'extrémité libre (46) du levier d'actionnement est conformée en bec (52) pour être reçue dans ledit cran (54) en vue de retenir la clef en position enfoncée

9. Antivol selon la revendication 8 prise ne combinaison avec la revendication 7, caractérisé en ce que le cran (54) est formé à proximité dudit bord (21) de la clef (20), et en ce que le bec de retenue (52) est délimité par ladite rampe supérieure (48) et par une rampe inférieure (50) provoquant l'échappement du bec de retenue (52) hors du cran (54) lors de l'extraction de la clef (20) hors du dispositif d'identification.

10. Antivol selon l'une quelconque des revendications 4 à 9, caractérisé en ce que la direction (D) d'introduction longitudinale de la clef est sensiblement perpendiculaire à l'axe (A3) de pivotement du levier d'actionnement (44).

11. Antivol selon l'une quelconque des revendications 4 à 10, caractérisé en ce qu'il comporte des moyens (56, 58) de blocage en rotation de l'axe de pivotement (A3) du levier d'actionnement (44) dans sa position angulaire de retenue de la clef (20) pour empêcher l'extraction de cette dernière lorsque l'axe de commande (30) n'est pas dans sa position angulaire de repos.

12. Antivol selon la revendication 11, caractérisé en ce que les moyens de blocage comportent deux butées complémentaires (56, 58) liées respectivement en rotation à l'axe de commande (30, 32) et à l'axe de pivotement (43) du levier d'actionnement (44).

13. Antivol selon l'une quelconque des revendications précédentes, caractérisé en ce qu'il comporte un boîtier (10) comportant une ouverture (18) pour l'introduction de la clef (20) dans le dispositif d'identification et qui est équipé d'un bouton (32) de manoeuvre de l'axe de commande (30) pour l'actionnement en rotation de ce dernier entre ses différentes positions angulaires.

14. Antivol selon l'une quelconque des revendications précédentes, caractérisé en ce que le dispositif d'identification est un dispositif de lecture de données contenues dans une clef réalisée sous la forme d'un support de données, notamment en forme de badge (20).
